(19) Europäisches Patentamt European Patent Office Office européen des brevets

(11) **EP 4 086 804 A1**

(12) **EUROPEAN PATENT APPLICATION**
published in accordance with Art. 153(4) EPC

(43) Date of publication:
**09.11.2022 Bulletin 2022/45**

(51) International Patent Classification (IPC):
***G06F 30/23*** (2020.01)  ***E01D 19/16*** (2006.01)

(21) Application number: **21842910.8**

(86) International application number:
**PCT/CN2021/086388**

(22) Date of filing: **12.04.2021**

(87) International publication number:
**WO 2022/012100 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.07.2020 CN 202010693423**

(71) Applicant: **China Railway Major Bridge Reconnaissance & Design Institute Co., Ltd. Wuhan, Hubei 430000 (CN)**

(72) Inventors:
 • **XIAO, Haizhu**
  **Wuhan, Hubei 430000 (CN)**

 • **HE, Dongsheng**
  **Wuhan, Hubei 430000 (CN)**
 • **GAO, Zongyu**
  **Wuhan, Hubei 430000 (CN)**
 • **PAN, Tao**
  **Wuhan, Hubei 430000 (CN)**
 • **LIU, Junfeng**
  **Wuhan, Hubei 430000 (CN)**
 • **QIU, Yuanxi**
  **Wuhan, Hubei 430000 (CN)**
 • **YI, Libang**
  **Wuhan, Hubei 430000 (CN)**

(74) Representative: **Lohmanns Lohmanns & Partner mbB Benrather Schlossallee 49-53 40597 Düsseldorf (DE)**

(54) **METHOD FOR DETERMINING NUMBER OF CROSSED HANGERS FOR COOPERATIVE SYSTEM BRIDGE**

(57) A method for determining the number of crossed hangers for a cooperative system bridge. The method comprises the following steps: establishing a cooperative system bridge finite element model that comprises a mid-span main cable, a hanger and a main beam (SI); providing a hanger in the cooperative system bridge finite element model, and applying a live load to perform finite element analysis on the cooperative system bridge finite element model, so as to obtain an end hanger live load axial force amplitude (S2); and applying the same live load to perform finite element analysis on a cooperative system bridge finite element model in which the number of hangers gradually increases, until the end hanger live load axial force amplitude of the previous cooperative system bridge finite element model is less than the end hanger live load axial force amplitude of the current cooperative system bridge finite element model, and determining the number of hangers set for the current cooperative system bridge finite element model to be the number of crossed hangers of a cooperative system bridge (S3). The problems of a calculation process being very complex, a cooperative system bridge model being large, stay cables needing to be adjusted after hangers are changed, and a trial calculation process taking a long time can be solved.

Fig. 1

**Description**

**Field of the Invention**

The present invention relates to the technical field of bridge engineering, and in particular to a method for determining the number of crossed hangers for a cooperative system bridge.

**Background of the Invention**

The cooperative system bridge is composed of cable-stayed section and suspension section. Modern cooperative system bridge is generally composed of cable-stayed part scattered from the main tower and suspension part suspended in the middle of the span. The stiffness of the cable-stayed part is large and that of the suspension part is small, and the difference between the stiffness of the two parts leads to a very large fatigue stress amplitude of the hangers (slings) in the suspension part, which often becomes the key problem in controlling the design of the cooperative system bridge.

Many scholars have carried out parametric research on this, and proved that appropriately increasing the number of crossed hangers in the overlapping area of the cable-stayed section and the suspension section is an effective measure to reduce the fatigue stress amplitude of the hangers.

However, the specific number of the crossed hangers needs to be determined through continuous trial calculation. The calculation process is very complicated, the cooperative system bridge model is often large, and the stay cables need to be adjusted after changing the hanger rods, resulting in a long time-consuming in the process of the trial calculation.

**Summary of the Invention**

In view of the defects existing in the prior art, the purpose of the present invention is to provide a method for determining the number of crossed hangers for a cooperative system bridge, which can solve the problem that the calculation process in the prior art is very complicated, the model of the cooperative system bridge is large, and the stay cables need to be adjusted after the hanger rods are changed, resulting in a long-time consuming in the process of the trail calculation.

In order to achieve the above purpose, the present invention adopts the following technical solution:
The present invention provides a method for determining the number of crossed hangers for a cooperative system bridge, comprising the following steps:

establishing a finite element model of a cooperative system bridge comprising a mid-span main cable, a hanger and a main beam;

providing a hanger in the finite element model of the cooperative system bridge, and applying a live load to perform finite element analysis on the finite element model of the cooperative system bridge, so as to obtain an end hanger live load axial force amplitude; and

applying the same live load to perform the finite element analysis on the finite element model of the cooperative system bridge in which the number of hangers is gradually increased, until the end hanger live load axial force amplitude of the previous finite element model of the cooperative system bridge is smaller than that of the current finite element model of the cooperative system bridge, and determining the number of hangers set for the current finite element model of the cooperative system bridge to be the number of the crossed hangers of the cooperative system bridge.

On the basis of the above technical solution, in the finite element model of the cooperative system bridge, the supports at both ends of the mid-span main cable adopt a vertical rigid support and a longitudinal elastic support which are equivalent in effect.

On the basis of the above technical solution, the longitudinal elastic support of the mid-span main cable is simulated by a longitudinal spring.

On the basis of the above technical solution, the stiffness of the longitudinal spring is

$$K_1 = \frac{E_s A_{sb} \cos^3 \theta}{L_{sb}} + \frac{3E_c I_c}{h^3}$$

, wherein $L_{sb}$ is a span of a side-span main cable; $\theta$ is a horizontal inclination of the side-span main cable; $E_s$ is elastic modulus of the main cable; $A_{sb}$ is an area of a side cable; $E_c$ is elastic modulus of a main tower; $I_c$ is longitudinal anti-bending moment of inertia of the main tower; and h is a height of the main tower.

On the basis of the above technical solution, in the finite element model of the cooperative system bridge, the main beam of a cable-stayed section adopts an elastic foundation beam which is equivalent in effect.

On the basis of the above technical solution, the elastic foundation beam is simulated as a rigid support at a constraint position of a support, the value of a vertical elastic stiffness at other positions of the elastic foundation beam is taken as the value of the vertical elastic stiffness of a stay cable at the middle position or the spacing of the stay cable.

On the basis of the above technical solution, the vertical elastic stiffness at other positions of the elastic foundation beam is

$$K_2 = \frac{E_{cb}A_c \sin^2\alpha\cos\alpha}{L_{cb}D_{cd}},$$

wherein $E_{cb}$ is effective elastic modulus of the stay cable, which is corrected according to Ernst formula; $A_c$ is an area of the stay cable; $\alpha$ is a horizontal inclination of the stay cable; $L_{cb}$ is a horizontal projection length of the stay cable; and $D_{cd}$ is a longitudinal bridge distance between anchor points of the stay cable on the beam.

On the basis of the above technical solution, the main beam of the finite element model of the cooperative system bridge comprises the main beam in the mid-span part.

Compared with the prior art, the present invention has the advantages: the present invention simplifies the model according to the stress characteristics of the end hanger, and adopts the finite element model which only comprises the mid-span main cable, the hangers and the main beam of the whole bridge. The supports at both ends of the mid-span main cable adopt a vertical rigid support and a longitudinal elastic support which are equivalent in effect, the longitudinal elastic support of the mid-span main cable is simulated by a longitudinal spring; and the main beam of the cable-stayed section adopts an elastic foundation beam which is equivalent in effect, the elastic foundation beam is simulated as a rigid support at a constraint position of a support, the value of the vertical elastic stiffness at other positions of the elastic foundation beam is taken as the value of the vertical elastic stiffness of a stay cable at the middle position or the spacing of the stay cable. After simplification, the complicated calculation work such as model modification, cable readjustment and solution caused by the update of the number of end hangers is avoided, and the calculation is more efficient. Compared with the method of the prior art, the scale of the finite element model of the present invention is about 15% of that of the conventional method, and there is no need to adjust the stay cable, and the difference of the calculated end hanger live load axial force amplitude between the present invention and the conventional method is about 6%. Therefore, the present invention has higher calculation efficiency and better error control, which can solve the problem that the calculation process in the prior art is very complicated, the model of the cooperative system bridge is large, the stay cables need to be adjusted after hanger rods are changed, resulting in a long-time consuming in the process of the trail calculation.

**Brief Description of the Drawings**

In order to better illustrate the technical solution in the embodiments of the present application, the following will briefly introduce the drawings needed in the description of the embodiments, and it is obvious that the drawings in the following description are only a part of embodiments of the present application, for those of ordinary skill in the art, other drawings may also be obtained based on these drawings without any inventive efforts.

Fig. 1 is a flowchart of a method for determining the number of crossed hangers for a cooperative system bridge in the embodiment of the present invention;

Fig. 2 is a finite element model diagram of an existing cooperative system bridge in the embodiment of the present invention;

Fig. 3 is a partial view of a finite element model of an existing cooperative system bridge in the embodiment of the present invention;

Fig. 4 is a finite element model diagram of a cooperative system bridge of the present application in the embodiment of the present invention.

In the figures: 1-main cable; 2-stay cable; 3-hanger; 4-main beam; 5-main tower; 6-auxiliary pier; 7-anchorage.

**Detailed Description of the Embodiments**

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without creative efforts shall fall within the protection scope of the present application.

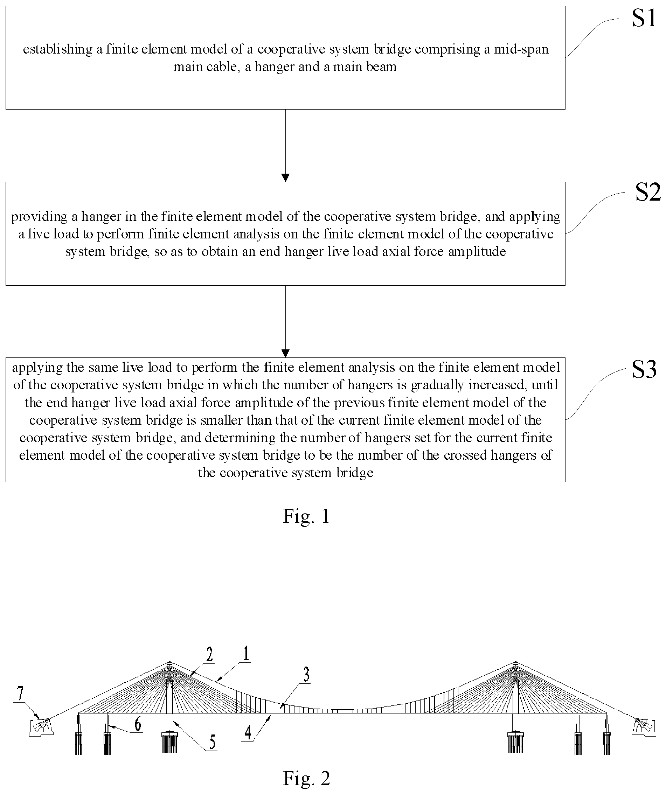

Fig. 1 is a flowchart of a method for determining the number of crossed hangers for a cooperative system bridge in the embodiment of the present invention. As shown in Fig. 1, the embodiment of the present invention is further described in detail below in combination with the drawings.

The present invention provides a method for determining the number of crossed hangers of a cooperative system bridge, comprising the following steps.

S1: A finite element model of a cooperative system bridge comprising a mid-span main cable, a hanger and a main beam is established.

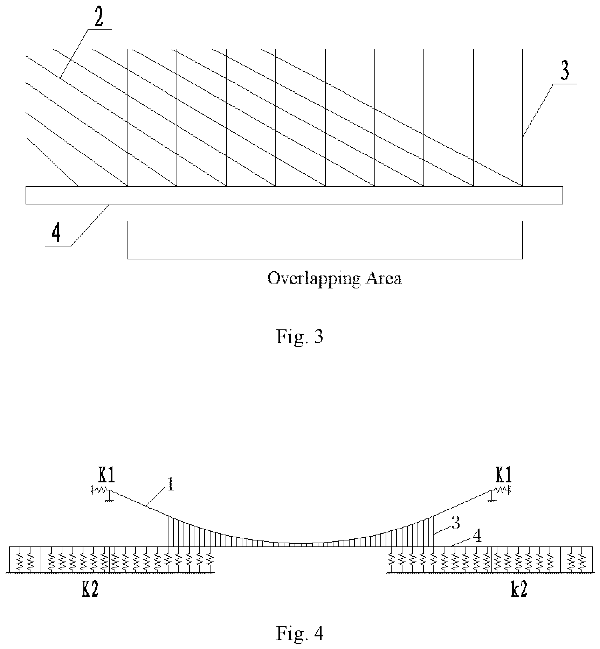

Fig. 2 is a finite element model diagram of an existing cooperative system bridge in the embodiment of the present invention; and Fig. 3 is a partial view of a finite element model of an existing cooperative system bridge in the embodiment of the present invention. As shown in Fig. 2 and Fig. 3, the finite element model of the existing cooperative system bridge comprises a main cable 1, stay cables 2, hangers 3, a main beam 4, a main tower 5, an auxiliary pier 6 and an anchorage 7.

Fig. 4 is a finite element model diagram of a cooperative system bridge of the present application in the embodiment of the present invention. As shown in Fig. 4, the simplified finite element model of the cooperative system bridge only comprises the mid-span main cable, the hangers and the main beam of the whole bridge.

In this embodiment, the finite element model which only comprises the mid-span main cable, the hangers and the main beam is adopted, which can make the operation of adjusting the number of the hangers more convenient, simplify the model to make the process of the trial calculation simpler, and improve the efficiency of the calculation.

Table 1 is a comparison table, which shows the comparison between the calculation method of the present invention and the conventional calculation method as follows:

| Method Comparison of Embodiments | Present Invention | Prior Art |
|---|---|---|
| Node Number of Model | 419 | 2877 |
| Unit Number of Model | 416 | 2646 |
| Whether It Is Necessary to | No | Yes |
| Adjust Cable Force of Stay Cable | | |
| End Hanger Live Load Axial Force Amplitude(kN) | 1960 | 1840 |

According to the data in the table, the node number of model and the unit number of model in the prior art are much larger than those in the present invention. The weight of the beam is fixed, and the stay cables and the hangers in the crossed section bear the weight of the beam at the same time. After the number of crossed hangers changes, the cable force of the stay cables needs to be adjusted. In the prior art, the cable force of the stay cables needs to be adjusted when the number of the hangers is adjusted. In the present invention, there is no need to adjust, so the time of model adjustment and calculation can be greatly saved. The end hanger refers to the outermost one of all hangers. The end hanger live load axial force amplitude refers to the amount of change in the internal force of the end hanger caused by the vehicle crossing the bridge. The end hanger is equivalent to a dividing line between the cable-stayed part and the suspension part. The difference in the two stiffnesses leads to a large end hanger live load axial force. Through adjusting the number of the crossed hangers, it is equivalent to adding a slow transition "staircase" to the section with sudden stiffness change, which obviously improves the stress of the hangers.

In some alternative embodiments, in the finite element model of the cooperative system bridge, the supports of the mid-span main cable adopt a vertical rigid support and a longitudinal elastic support which are equivalent in effect.

In some alternative embodiments, the longitudinal elastic support of the mid-span main cable is simulated by a longitudinal spring.

$$K_1 = \frac{E_s A_{sb} \cos^3 \theta}{L_{sb}} + \frac{3 E_c I_c}{h^3}$$

In some alternative embodiments, the stiffness of the longitudinal spring is

, wherein $L_{sb}$ is a span of a side-span main cable; $\theta$ is a horizontal inclination of the side-span main cable; $E_s$ is elastic modulus of the main cable; $A_{sb}$ is an area of a side cable; $E_c$ is elastic modulus of a main tower; $I_c$ is longitudinal anti-bending moment of inertia of the main tower; and h is a height of the main tower.

In some alternative embodiments, in the finite element model of the cooperative system bridge, the main beam of a cable-stayed section adopts an elastic foundation beam which is equivalent in effect.

In some alternative embodiments, the elastic foundation beam is simulated as a rigid support at a constraint position of a support, the value of a vertical elastic stiffness at other positions of the elastic foundation beam is taken as the value of the vertical elastic stiffness of a stay cable at the middle position or the spacing of the stay cable.

In some alternative embodiments, the vertical elastic stiffness at other positions of the elastic foundation beam

$$K_2 = \frac{E_{cb} A_c \sin^2 \alpha \cos \alpha}{L_{cb} D_{cd}}$$

is , wherein $E_{cb}$ is effective elastic modulus of the stay cable, which is corrected according to Ernst formula; $A_c$ is an area of the stay cable; $\alpha$ is a horizontal inclination of the stay cable; $L_{cb}$ is a horizontal projection length of the stay cable; and $D_{cd}$ is a longitudinal bridge distance between anchor points of the stay cable on the beam.

In some alternative embodiments, the main beam of the finite element model of the cooperative system bridge comprises the main beam in the mid-span part.

In this embodiment, the main beam in the mid-span part is the suspension part of the cooperative system bridge. According to the distribution characteristics that the value of the axial force influence line of the end hanger on the side span main beam is small, only the main beam in the mid-span part is selected for the main beam of the finite element model of the cooperative system bridge, which can further reduce the scale of the model, speed up the speed of trial calculation and adjust the efficiency of the model.

S2: A hanger is arranged in the finite element model of the cooperative system bridge, and a live load is applied to perform finite element analysis on the finite element model of the cooperative system bridge so as to obtain an end hanger the live load axial force amplitude.

S3: The same live load is applied to perform the finite element analysis on the finite element model of the cooperative system bridge in which the number of hangers is gradually increased, until the end hanger live load axial force amplitude of the previous finite element model of the cooperative system bridge is smaller than that of the current finite element model of the cooperative system bridge, and the number of hangers set for the current finite element model of the cooperative system bridge is determined to be the number of the crossed hangers of the cooperative system bridge.

In summary, the present invention simplifies the model according to the stress characteristics of the end hanger, and adopts the finite element model which only comprises the mid-span main cable, the hangers and the main beam of the whole bridge. The supports of the mid-span main cable adopt a vertical rigid support and a longitudinal elastic support which are equivalent in effect, the longitudinal elastic support of the mid-span main cable is simulated by a longitudinal spring; and the main beam of the cable-stayed section adopts an elastic foundation beam which is equivalent in effect, the elastic foundation beam is simulated as a rigid support at a constraint position of a support, the value of the vertical elastic stiffness at other positions of the elastic foundation beam is taken as the value of the vertical elastic stiffness of a stay cable at the middle position or the spacing of the stay cable. After simplification, the complicated calculation work such as model modification, cable readjustment and solution caused by the update of the number of end hangers is avoided, and the calculation is more efficient. Compared with the method of the prior art, the scale of the finite element model of the present invention is about 15% of that of the conventional method, and there is no need to adjust the stay cable, and the difference of the calculated end hanger live load axial force amplitude between the present invention and the conventional method is about 6%. The present invention has higher calculation efficiency and better error control.

In the description of the present application, it should be noted that the orientation or positional relationship indicated by the terms "upper", "lower", etc. are based on the orientation or positional relationship shown in the drawings, which is only for the convenience of describing the present application and simplifying the description, instead of indicating or implying that the pointed device or element must have a specific orientation, be configured and operated in a specific orientation, therefore it cannot be understood as a limitation of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application can be understood according to specific circumstances.

It should be noted that relational terms such as "first" and "second" are only for distinguishing one entity or operation from another entity or operation in the present application, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the spirit or scope of the present application. Therefore, the present application will not be limited to the embodiments shown in this document, but will be subject to the widest scope consistent with the principles and novel features applied herein.

**Claims**

1. A method for determining the number of crossed hangers for a cooperative system bridge, comprising the following steps:

   establishing a finite element model of a cooperative system bridge comprising a mid-span main cable, a hanger and a main beam;
   providing a hanger in the finite element model of the cooperative system bridge, and applying a live load to perform finite element analysis on the finite element model of the cooperative system bridge, so as to obtain an end hanger live load axial force amplitude; and
   applying the same live load to perform the finite element analysis on the finite element model of the cooperative system bridge in which the number of hangers is gradually increased, until the end hanger live load axial force amplitude of the previous finite element model of the cooperative system bridge is smaller than that of the current finite element model of the cooperative system bridge, and determining the number of hangers set for the current finite element model of the cooperative system bridge to be the number of the crossed hangers of the cooperative system bridge.

2. The method for determining the number of the crossed hangers for the cooperative system bridge according to claim 1, wherein in the finite element model of the cooperative system bridge, the supports at both ends of the mid-span main cable adopt a vertical rigid support and a longitudinal elastic support which are equivalent in effect.

3. The method for determining the number of the crossed hangers for the cooperative system bridge according to claim 2, wherein the longitudinal elastic support of the mid-span main cable is simulated by a longitudinal spring.

4. The method for determining the number of the crossed hangers for the cooperative system bridge according to claim 3, wherein the stiffness of the longitudinal spring is $K_1 = \dfrac{E_s A_{sb} \cos^3 \theta}{L_{sb}} + \dfrac{3 E_c I_c}{h^3}$ , wherein $L_{sb}$ is a span of a side-span main cable; $\theta$ is a horizontal inclination of the side-span main cable; $E_s$ is elastic modulus of the main cable; $A_{sb}$ is an area of a side cable; $E_c$ is elastic modulus of a main tower; $I_c$ is longitudinal anti-bending moment of inertia of the main tower; and h is a height of the main tower.

5. The method for determining the number of the crossed hangers for the cooperative system bridge according to claim 1, wherein in the finite element model of the cooperative system bridge, the main beam of a cable-stayed section adopts an elastic foundation beam which is equivalent in effect.

6. The method for determining the number of the crossed hangers for the cooperative system bridge according to claim 5, wherein the elastic foundation beam is simulated as a rigid support at a constraint position of a support, the value of a vertical elastic stiffness at other positions of the elastic foundation beam is taken as the value of the vertical elastic stiffness of a stay cable at the middle position or the spacing of the stay cable.

7. The method for determining the number of the crossed hangers for the cooperative system bridge according to claim 6, wherein the vertical elastic stiffness at other positions of the elastic foundation beam is

$$K_2 = \frac{E_{cb}A_c \sin^2 \alpha \cos \alpha}{L_{cb}D_{cd}},$$

wherein $E_{cb}$ is effective elastic modulus of the stay cable, which is corrected according to Ernst formula; $A_c$ is an area of the stay cable; $\alpha$ is a horizontal inclination of the stay cable; $L_{cb}$ is a horizontal projection length of the stay cable; and $D_{cd}$ is a longitudinal bridge distance between anchor points of the stay cable on the beam.

8. The method for determining the number of the crossed hangers for the cooperative system bridge according to claim 1, wherein the main beam of the finite element model of the cooperative system bridge comprises the main beam in the mid-span part.

establishing a finite element model of a cooperative system bridge comprising a mid-span main cable, a hanger and a main beam — S1

providing a hanger in the finite element model of the cooperative system bridge, and applying a live load to perform finite element analysis on the finite element model of the cooperative system bridge, so as to obtain an end hanger live load axial force amplitude — S2

applying the same live load to perform the finite element analysis on the finite element model of the cooperative system bridge in which the number of hangers is gradually increased, until the end hanger live load axial force amplitude of the previous finite element model of the cooperative system bridge is smaller than that of the current finite element model of the cooperative system bridge, and determining the number of hangers set for the current finite element model of the cooperative system bridge to be the number of the crossed hangers of the cooperative system bridge — S3

Fig. 1

Fig. 2

Overlapping Area

Fig. 3

Fig. 4

## INTERNATIONAL SEARCH REPORT

| International application No. |
|---|
| **PCT/CN2021/086388** |

| | |
|---|---|
| **A.** | **CLASSIFICATION OF SUBJECT MATTER** |
| | G06F 30/23(2020.01)i;  E01D 19/16(2006.01)i |
| | According to International Patent Classification (IPC) or to both national classification and IPC |

| | |
|---|---|
| **B.** | **FIELDS SEARCHED** |

Minimum documentation searched (classification system followed by classification symbols)

G06F; E01D

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: 主缆, 吊索, 数量, 主梁, 有限元模型, 交叉, 重叠, finite, element, model, cable, force, stay, slings, main, cross, overlap

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 111931400 A (CHINA RAILWAY MAJOR BRIDGE RECONNAISSANCE & DESIGN INSTITUTE CO., LTD.) 13 November 2020 (2020-11-13) claims 1-8 | 1-8 |
| A | CN 111209625 A (CHINA RAILWAY MAJOR BRIDGE RECONNAISSANCE & DESIGN INSTITUTE CO., LTD.) 29 May 2020 (2020-05-29) description, paragraphs [0039]-[0068] | 1-8 |
| A | CN 107724226 A (ANHUI TRANSPORTATION HOLDING GROUP CO., LTD.) 23 February 2018 (2018-02-23) entire document | 1-8 |
| A | CN 106777778 A (NANJING FORESTRY UNIVERSITY) 31 May 2017 (2017-05-31) entire document | 1-8 |
| A | US 6728987 B1 (CH2M HILL, INC.) 04 May 2004 (2004-05-04) entire document | 1-8 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 May 2021** | **27 May 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/086388**

| Patent document cited in search report | | | Publication date (day/month/year) | Patent family member(s) | Publication date (day/month/year) |
|---|---|---|---|---|---|
| CN | 111931400 | A | 13 November 2020 | None | |
| CN | 111209625 | A | 29 May 2020 | None | |
| CN | 107724226 | A | 23 February 2018 | None | |
| CN | 106777778 | A | 31 May 2017 | None | |
| US | 6728987 | B1 | 04 May 2004 | None | |

Form PCT/ISA/210 (patent family annex) (January 2015)